# EUROPÄISCHE PATENTSCHRIFT

(11) **EP 4 126 647 B1**
(45) Veröffentlichungstag und Bekanntmachung des Hinweises auf die Patenterteilung: **05.08.2026**
(21) Anmeldenummer: 21703652.4
(22) Anmeldetag: 04.02.2021
(51) Int. Cl.: B62K 21/04, B60R 25/02, B62H 5/02

(54) **LENKERANORDNUNG MIT ZÜNDLENKSCHLOSS FÜR EIN NEIGEFAHRZEUG**
STEERING ARRANGEMENT WITH IGNITION STEERING LOCK FOR TILTING VEHICLE
DISPOSITIF DE DIRECTION AVEC VERROUILLAGE DE DIRECTION AU CONTACT POUR VÉHICULE INCLINABLE

(30) Priorität: 31.03.2020 DE 102020108822
(43) Veröffentlichungstag der Anmeldung: 08.02.2023
(73) Patentinhaber: Bayerische Motoren Werke Aktiengesellschaft, 80809 München (DE)
(72) Erfinder: DE MARTINO, Claudio, 81247 Muenchen (DE)
(86) Internationale Anmeldenummer: PCT/EP2021/052582
(87) Internationale Veröffentlichungsnummer: WO 2021/197688

(56) Entgegenhaltungen:
- WO-A1-2019/064699
- DE-A1- 102018 128 430
- DE-A1- 102019 106 809
- JP-A- 2006 231 983
- JP-A- 2009 241 620

## Beschreibung

Die Erfindung betrifft eine Lenkeranordnung für ein Fahrzeug mit einem Zündlenkschloss, sowie ein entsprechend ausgerüstetes Fahrzeug mit einer entsprechenden Lenkeranordnung.

Bei Fahrzeugen, insbesondere bei Neigefahrzeugen, wie Motorrädern, sind Zündlenkschlösser üblicherweise direkt strukturfest verbaut. Die Befestigung ist in diesem Bezug unabhängig davon, ob es sich um ein mechanisches Zündlenkschloss mit einem Schlüssel oder um ein elektrisches Zündlenkschloss mit einer Fernbedienung handelt, und ist üblicherweise an dem Fahrzeugrahmen oder an einer oberen Gabelbrücke der Vorderradgabel realisiert. Nachteilig an diesen Fixierungen des Zündlenkschlosses ist, dass durch die in beiden Fällen strukturfeste Verschraubung Stöße und/oder Vibrationen, die beispielsweise von dem Motor oder von einem Fahren über unebene Straßen resultieren, direkt in das Zündlenkschloss eingeleitet werden.

Aufgrund dieser Stöße bzw. Vibrationen kann es in ungünstigen Fällen zu einem Defekt des Zündlenkschlosses kommen. Dies tritt vor allem bei einem elektronischen Zündlenkschloss auf, sodass für bestimmte Fahrzeuge und Einsatzbereiche ein Zündlenkschloss mit einer Fernbedienung aufgrund von stoß- oder vibrationsbedingten Defekten nicht angeboten werden kann.

Die JP2006 231983A offenbart die Merkmale des Oberbegriffes des Anspruchs 1.

Die JP 2009 241620 A betrifft eine Tachoeinheit für ein Motorrad mit zwei Anzeigen und einem Kombinationsschalter.

Die DE 2019 106 809 A1 sowie die WO 2019/064699 betreffen Haltestrukturen für Instrumente, wie einen Tachometer.

Es ist eine Aufgabe der vorliegenden Erfindung, eine alternative Vorrichtung zur Fixierung eines Zündlenkschlosses insbesondere an einem Neigefahrzeug mit einer Halterung bereitzustellen, das die stoß- beziehungsweise vibrationsbedingten Ausfälle des Zündlenkschlosses minimiert und den Einsatz eines elektrischen Zündlenkschlosses mit einer Fernbedienung auch an erhöht stoß- oder vibrationsbelasteten Fahrzeugen ermöglicht. Diese Aufgabe wird durch eine Lenkeranordnung mit den Merkmalen des Patentanspruchs 1 sowie einem Fahrzeug mit einer entsprechenden Lenkeranordnung gemäß dem Gegenstand des Patentanspruchs 7 gelöst.

Demnach wird eine Lenkeranordnung für ein Fahrzeug bereitgestellt, mit einem Lenkerelement, einem Zündlenkschloss und einer Halterung, an der das Zündlenkschloss befestigt ist, wobei die Halterung durch Befestigungsmittel an dem Lenkerelement fixiert ist, und elastische Entkopplungselemente zur Stoß- und/oder Vibrationsentkopplung zwischen dem Lenkerelement und der Halterung angeordnet sind. Das Lenkerelement ist eine Gabelbrücke.

Als Fahrzeuge im Rahmen dieser Beschreibung kommen insbesondere alle Fahrzeuge mit einer entsprechenden Lenkeranordnung in Betracht, die über eine Gabelbrücke verfügen. Hierzu zählen beispielsweise sogenannte Neigefahrzeuge, also unter anderem Motorräder oder motorradähnliche Kraftfahrzeuge, wie Motorroller, insbesondere neigefähige zwei-, drei- oder vierrädrige Motorroller, Scooter oder Dergleichen. Ein Einsatz ist aber auch bei anderen motorgetriebenen Fahrzeugen, wie beispielsweise motorgetriebenen Fahrrädern, Dreirädern oder Quads möglich, die ebenfalls über eine entsprechende Lenkeranordnung mit Gabelbrücke verfügen können.

Gabelbrücken sind bei diesen Fahrzeugen als Teil der Vorderradaufhängung bekannt. Hierbei kommen meist zwei Gabelbrücken, eine obere und eine untere Gabelbrücke, zum Einsatz. Diese weisen üblicherweise jeweils eine oder zwei Aufnahmen für Federbeine (auch Gabelbeine genannt) der Vorderradaufhängung auf. Zusätzlich weisen sie eine Aufnahme für eine Lenksäule auf, welche eine drehbewegliche Verbindung mit dem Steuerkopf einer Fahrzeugstruktur, wie beispielsweise einem Fahrzeugrahmen, herstellt.

Wie beschrieben ist das Zündlenkschloss also mittelbar über die Halterung mit dem Lenkerelement des Fahrzeugs, der Gabelbrücke, verbunden. Mit anderen Worten beschrieben bedeutet dies, dass die Halterung als Adapter zwischen dem Zündlenkschloss einerseits und dem Lenkerelement andererseits vorgesehen ist. Hierzu ist das Zündlenkschloss ausschließlich mit der Halterung und diese wiederum mit Hilfe der Befestigungsmittel an dem Lenkerelement befestigt.

Zudem sind zwischen der Halterung und dem Lenkerelement die elastischen Entkopplungselemente vorgesehen, welche die Halterung gegenüber dem Lenkerelement zur Verhinderung oder zumindest zur Reduzierung einer Schwingungsübertragung (also insbesondere hinsichtlich Stößen und/oder Vibrationen) entkoppeln.

Dabei ist günstig, dass aufgrund der elastischen Entkopplungselemente während des Betriebs des Fahrzeugs auftretende Stöße und/oder Vibrationen nicht unmittelbar und direkt auf das Zündlenkschloss übertragen, sondern zunächst durch die Entkopplungselemente und die Halterung gedämpft bzw. reduziert werden. Auf diese Weise ergeben sich eine höhere Ausfallsicherheit und ein größerer Einsatzbereich des Zündlenkschlosses, zum Beispiel auch im Offroad-Bereich oder bei hochdrehenden Motoren, die mit oder ohne Ausgleichselementen ausgestattet sein können, wo mit wesentlich stärkeren Stößen und/oder Vibrationen zu rechnen ist. Besonders vorteilhaft ist, dass die Vorrichtung bei sämtlichen der genannten Fahrzeuge und deren Vibrationsprofilen einsetzbar ist, da sie sich über die Shore-Härte oder das Elastizitätsmodul der Entkopplungselemente an die jeweiligen Anforderungen anpassen lässt. Als Entkopplungselement können beispielsweise Gummitüllen, Gummiringe, Gummibuchsen oder Gummischeiben eingesetzt werden.

Gemäß einer vorteilhaften Ausführungsform ist vorgesehen, dass die elastischen Entkopplungselemente in einem montierten Zustand direkt an der Halterung anliegen. Mittels dieser Anordnung werden die Stöße und/oder Vibrationen, die aus dem Betrieb des Fahrzeugs resultieren, optimal gedämpft bzw. reduziert. Dies resultiert daraus, dass die elastischen Entkopplungselemente diese Vibrationen und/oder Stöße unmittelbar von dem Fahrzeug und dessen Struktur aufnehmen, diese dann aufgrund der Entkopplung und der Elastizität durch die Entkopplungselemente reduziert und erst anschließend zu dem Zündlenkschloss geleitet werden. Vorzugsweise sind die Entkopplungselemente derart ausgestaltet, dass diese nicht nur zwischen der Halterung und dem Lenkerelement angeordnet sind, sondern sich auch zwischen der Halterung und dem jeweiligen Befestigungsmittel erstrecken, um auch diese beiden Bauteile zur Verhinderung oder zumindest einer Reduzierung einer Schwingungsübertragung voneinander zu entkoppeln. Beispielsweise eignen sich hierzu insbesondere die genannten Gummibuchsen.

Vorzugsweise sind an der Halterung definierte Befestigungsabschnitte vorgesehen, an denen die Halterung mittels der Befestigungsmittel an dem Lenkerelement des Fahrzeugs fixiert werden kann. Dadurch kann die Halterung und damit auch das Zündlenkschloss auf eine einfache Art und Weise an dem Fahrzeug fixiert werden. Als Befestigungsmittel dienen vorzugsweise Schrauben. Aber auch eine Rastverbindung mittels als Clips ausgebildeter Befestigungsmittel ist möglich.

Die Halterung ist an einer Unterseite der Gabelbrücke fixiert.

Die Befestigung an der Unterseite ermöglicht eine für den Nutzer unauffällige Anordnung der Halterung und der Befestigungsmittel, da diese auf der dem Nutzer abgewandten Unterseite positioniert sind. Die Zugänglichkeit zum Zündlenkschloss kann dadurch sichergestellt werden, dass sich dieses in Richtung des Fahrers durch eine entsprechende Ausnehmung in der Gabelbrücke erstreckt und somit für diesen gut zugänglich ist.

Eine Anordnung auf der Oberseite ist ebenso möglich, aber nicht beansprucht, bietet diese Anordnung insbesondere eine leichte Zugänglichkeit zu der gesamten Halterung und den Befestigungsmitteln.

Des Weiteren hat eine Positionierung der Befestigungsabschnitte große Auswirkungen auf die Stoß- und/oder Vibrationsentkopplung bzw. Übertragung der Stöße und/oder Vibrationen auf das Zündlenkschloss. Optimale Ergebnisse lassen sich erzielen, wenn eine Aufspannfläche der Befestigungsabschnitte so groß wie möglich ist. Als Aufspannfläche ist hierbei die Fläche definiert, die eingegrenzt wird, wenn man sämtliche Befestigungsabschnitte mit ihren benachbarten Befestigungsabschnitten mit einer gedachten Linie verbindet.

Zum Beispiel können in beiden Fällen zumindest zwei Befestigungsabschnitte einen größeren Abstand zueinander aufweisen, als zwei weitere Befestigungsabschnitte zueinander.

Gemäß einer Ausführungsform kann die Halterung im Wesentlichen U-förmig, rechteckig oder trapezförmig ausgebildet sein.

Vorzugsweise ist das Zündlenkschloss mit einem ersten und einem gegenüberliegenden zweiten Schenkel der Halterung verbunden. Es hat sich als besonders vorteilhaft erwiesen, wenn hierbei die Verbindungspunkte des Zündlenkschlosses mit den beiden Schenkeln derart positioniert sind, dass eine gedachte Verbindungslinie der Verbindungspunkte innerhalb der Aufspannfläche, also zwischen den Befestigungsabschnitten, liegt.

Alternativ hierzu kann die Halterung zwei separat voneinander ausgebildete Halteabschnitte umfassen, die beabstandet zueinander angeordnet sind, wobei das Zündlenkschloss zwischen den beiden Halteabschnitten angeordnet und mit beiden Halteabschnitten verbunden ist.

Vorzugsweise sind zumindest einer der beiden oder beide Halteabschnitte als Steg beziehungsweise als Stege ausgebildet. Dies bietet die Möglichkeit die Befestigungsabschnitte der Stege jeweils im Bereich ihrer Enden vorzusehend und dort mit dem Lenkerelement zu verbinden. Entsprechend sind die Verbindungspunkte des Zündlenkschlosses mit den beiden Stegen derart positioniert, dass eine gedachte Verbindungslinie der beiden Verbindungspunkte innerhalb der entsprechenden Aufspannfläche, also zwischen den Befestigungsabschnitten, liegt. Auf diese Weise kann ein möglichst optimales Hebelverhältnis zur Abstützung der Halterung an dem Lenkerelement erzielt werden.

Des Weiteren wird ein Fahrzeug mit einer Lenkeranordnung bereitgestellt, wobei die Lenkeranordnung gemäß dieser Beschreibung ausgebildet ist.

Die Erfindung wird anhand zweier Ausführungsbeispiele unter Bezugnahme auf die Zeichnungen näher erläutert. Es zeigen:
- Fig. 1:: eine perspektivische Ansicht einer Lenkeranordnung gemäß der Beschreibung,
- Fig. 2:: eine Draufsicht auf eine Unterseite eines Lenkerelements der Lenkeranordnung gemäß Fig. 1,
- Fig. 3:: eine perspektivische Ansicht einer ersten Ausführungsform einer ersten Halterung für die Lenkeranordnung nach Fig. 1, und
- Fig. 4:: eine perspektivische Ansicht einer zweiten Ausführungsform einer zweiten Halterung für die Lenkeranordnung nach Fig. 1.

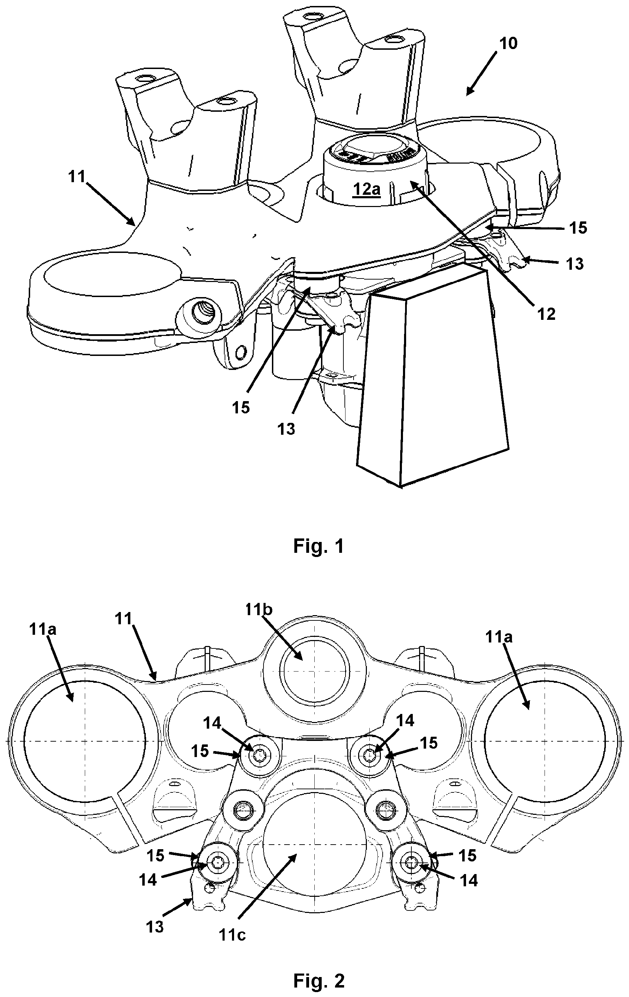

Fig. 1 zeigt in perspektivischer Ansicht eine Lenkeranordnung 10 für ein beispielhaft als Motorrad ausgebildetes Fahrzeug (nicht näher dargestellt) mit einem Lenkerelement 11, einem Zündlenkschloss 12 und einer Halterung 13, an der das Zündlenkschloss 12 befestigt ist, wobei das Lenkerelement 11 eine Gabelbrücke 11 (beide Begriffe werden im Folgenden synonym verwendet) ist. Selbstverständlich kann das Fahrzeug auch als ein anderes Fahrzeug im Sinne der Beschreibung ausgebildet sein.

Wie insbesondere aus der in Fig. 2 dargestellten Ansicht einer Unterseite des Lenkerelements 11 ersichtlich ist, ist die Halterung 13 beispielhaft an vier definierten Befestigungsabschnitten 16 durch jeweils ein als Schraube ausgebildetes Befestigungsmittel 14 an der Unterseite des Lenkerelements 11 fixiert. Selbstverständlich können aber auch mehr oder weniger als vier Befestigungsabschnitte 16 mit jeweils einem Befestigungsmittel 14 vorgesehen werden.

Zusätzlich sind elastische Entkopplungselemente 15 zur Stoß- und/oder Vibrationsentkopplung zwischen dem Lenkerelement 11 und der Halterung 13 angeordnet. Die Entkopplungselemente 15 sind - wie in Fig. 1 erkennbar - derart ausgestaltet, dass sich diese zusätzlich zu dieser Anordnung zwischen der Halterung 13 und dem Lenkerelement 11 außerdem auch zwischen der Halterung 13 und dem jeweiligen Befestigungsmittel 14 erstrecken, um die genannten Bauteile zur Verhinderung oder zumindest einer Reduzierung einer Schwingungsübertragung voneinander zu entkoppeln. Als Entkopplungselemente 15 können beispielsweise Gummiringe, Gummibuchsen oder Gummischeiben eingesetzt werden.

Die Gabelbrücke 11 weist zwei Aufnahmen 11a für zwei nicht dargestellte Federbeine (auch Gabelbeine genannt) einer Vorderradaufhängung des Motorrades, also der Vorderradgabel, auf. Zusätzlich ist an der Gabelbrücke 11 eine Aufnahme 11b für eine Lenksäule (nicht dargestellt) vorgesehen, welche eine drehbewegliche Verbindung mit einem Steuerkopf einer Fahrzeugstruktur, wie beispielsweise einem Motorradrahmen, herstellt.

Wie voranstehend beschrieben ist das Zündlenkschloss 12 über die Halterung 13 lediglich mittelbar mit der Gabelbrücke 11 verbunden. Hierzu ist das Zündlenkschloss 12 ausschließlich mit der Halterung 13 und diese 13 wiederum mit Hilfe der vier Befestigungsmittel 15 an der Unterseite des Lenkerelements 11 befestigt.

Diese beschriebene Befestigung der Halterung 13 an der Unterseite des Lenkerelements 11 ermöglicht eine für den Nutzer unauffällige Anordnung der Halterung 13 und der Befestigungsmittel 14, da diese auf der dem Nutzer abgewandten Unterseite positioniert sind. Die Zugänglichkeit zum Zündlenkschloss 12 wird dadurch sichergestellt, dass sich dieses mit einem beispielhaft zylindrischen Abschnitt 12a in Richtung des Fahrers durch eine entsprechende Ausnehmung 11c in der Gabelbrücke 11 erstreckt und somit für den Fahrer gut zugänglich ist.

Die dargestellte Positionierung der Befestigungsabschnitte 16 hat vorteilhafte Auswirkungen auf die Stoß- und/oder Vibrationsentkopplung bzw. Übertragung der Stöße und/oder Vibrationen auf das Zündlenkschloss 12. Eine Aufspannfläche A der Befestigungsabschnitte 16 ist möglichst groß gewählt. Als Aufspannfläche A ist hierbei die Fläche definiert, die eingegrenzt wird, wenn man sämtliche Befestigungsabschnitte 16 mit ihren benachbarten Befestigungsabschnitten 16 mit einer gedachten Linie verbindet.

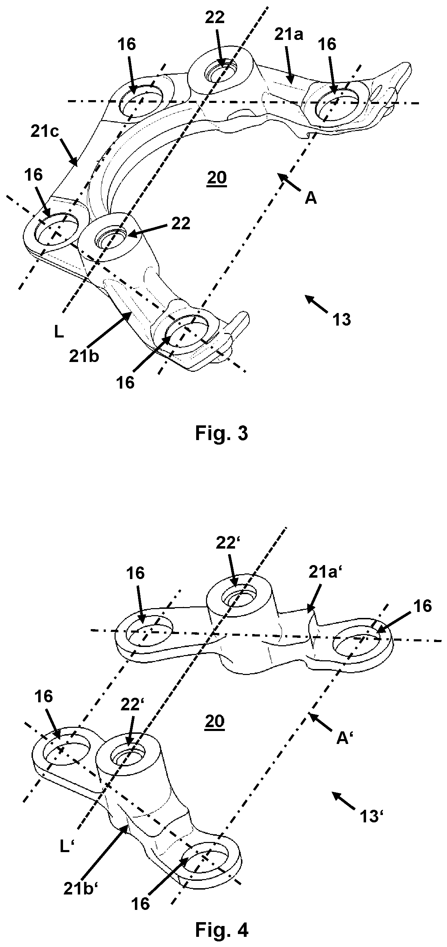

Fig. 3 zeigt die Halterung 13 gemäß einer ersten Ausführungsform im Detail. Die Halterung 13 weist eine Aussparung 20 auf, in die das Zündlenkschloss 12 eingesetzt wird.

Die gemäß der ersten Ausführungsform dargestellte Halterung 13 ist im Wesentlichen U-förmig ausgebildet und weist zwei voneinander beabstandete Schenkel 21a,21b auf, wobei ein Ende eines ersten Schenkels 21a mit einem benachbarten Ende eines zweiten Schenkels 21b durch einen Verbindungsabschnitt 21c verbunden ist und somit die U-Form mit einer zwischen den beiden Schenkeln 21a,21b definierten Aussparung 20 bildet. Zusätzlich können auch ein zweites Ende des ersten Schenkels 21a mit einem benachbarten zweigen Ende des zweiten Schenkels 21b verbunden sein, so dass sich eine rechteckige Form oder eine Trapezform ergibt (nicht dargestellt).

Das Zündlenkschloss 12 ist in der dargestellten Ausführungsform an jeweils einem Verbindungspunkt 22 mit dem ersten 21a und dem gegenüberliegenden zweiten Schenkel 21b der Halterung 13 verbunden. Jedem der beiden Schenkel 21a,21b ist also einer der beiden Verbindungspunkte 22 zum Verbinden mit dem Zündlenkschloss 12 zugeordnet (siehe Fig. 3). Optional sind die beiden Verbindungspunkte 22 derart an den beiden Schenkeln 21a,21b positioniert, dass eine gedachte Verbindungslinie L innerhalb der Aufspannfläche A, also zwischen den Befestigungsabschnitten 16, liegt.

Gemäß einer in Fig. 4 dargestellten, leicht abgewandelten zweiten Ausführungsform umfasst die Halterung 13' zwei separat voneinander ausgebildete Halteabschnitte 21a', 21b', die ebenfalls beabstandet zueinander angeordnet, jedoch nicht miteinander verbunden sind. Das Zündlenkschloss 12 kann dementsprechend in der zwischen den beiden Halteabschnitten 21a',21b' gebildeten Ausnehmung 20 angeordnet und mit beiden Halteabschnitten 21a',21b' verbunden werden.

Wie in Fig. 4 dargestellt, sind beide Halteabschnitte 21a',21b' als Stege ausgebildet.

Analog zu der in Fig. 3 dargestellten ersten Ausführungsform sind auch in diesem Fall zwei Verbindungspunkte 22' zum Verbinden mit dem Zündlenkschloss 12 vorgesehen und derart an den beiden Stegen 21a',21b' positioniert, dass eine gedachte Verbindungslinie L' innerhalb der entsprechenden Aufspannfläche A, also zwischen den Befestigungsabschnitten 16, liegt.

## Patentansprüche

1. Lenkeranordnung (10) für ein Fahrzeug mit einem Lenkerelement (11) des Fahrzeugs, einem Zündlenkschloss (12) und einer Halterung (13,13'), an der das Zündlenkschloss (12) befestigt ist, wobei die Halterung (13,13') durch Befestigungsmittel (14) an dem Lenkerelement (11) fixiert ist, wobei elastische Entkopplungselemente (15) zur Stoß- und/oder Vibrationsentkopplung zwischen dem Lenkerelement (11) und der Halterung (13,13') angeordnet sind, **wobei** das Lenkerelement (11) eine Gabelbrücke (11) ist, wobei die Halterung (13, 13') an einer Unterseite der Gabelbrücke (11) fxiert ist, **dadurch gekennzeichnet, dass** sich das Zündlenkschloss (12) in Richtung des Fahrers durch eine Ausnehmung in der Gabelbrücke (11) erstreckt.

2. Lenkeranordnung (10) nach Anspruch 1, dadurch gekenn-
zeichnet, dass die Halterung (13,13') eine Aussparung (20) aufweist, in die das Zündlenkschloss (12) eingesetzt ist.

3. Lenkeranordnung (10) nach mindestens einem der Ansprüche 1 bis 2, **dadurch gekennzeichnet, dass** die Halterung (13,13') im Wesentlichen U-förmig, rechteckig oder trapezförmig ausgebildet ist.

4. Lenkeranordnung (10) nach Anspruch 3, **dadurch gekennzeichnet,**
**dass** das Zündlenkschloss (12) mit einem ersten (21a) und einem gegenüberliegenden zweiten Schenkel (21b) der Halterung (13) verbunden ist.

5. Lenkeranordnung (10) nach mindestens einem der Ansprüche 1 bis 2, **dadurch gekennzeichnet, dass** die Halterung (13') zwei separat voneinander ausgebildete Halteabschnitte (21a',21b') umfasst, die beabstandet zueinander angeordnet sind, wobei das Zündlenkschloss (12) zwischen den beiden Halteabschnitten (21a',21b') angeordnet und mit beiden Halteabschnitten (21a',21b') verbunden ist.

6. Lenkeranordnung (10) nach Anspruch 5, **dadurch gekennzeichnet,**
**dass** zumindest einer der beiden oder beide Halteabschnitte (21a',21b') als Stege ausgebildet sind.

7. Fahrzeug mit einer Lenkeranordnung (10), **dadurch gekennzeichnet, dass** die Lenkeranordnung (10) gemäß einem der Ansprüche 1 bis 6 ausgebildet ist.

## Claims

1. Handlebar arrangement (10) for a vehicle with a handlebar element (11) of the vehicle, an lock (12) and a holder (13,13') to which the steering lock (12) is fastened, wherein the holder (13,13') is fixed to the handlebar element (11) by fastening means (14), wherein elastic decoupling elements (15) are arranged for impact and/or vibration decoupling between the handlebar element (11) and the holder (13,13'), wherein the handlebar element (11) is a fork bridge (11),
wherein the holder (13, 13') is fixed to an underside of the fork bridge (11), **characterized in**
**that** the steering lock (12) extends in the direction of the driver through a recess in the fork bridge (11).

2. Handlebar arrangement (10) according to claim 1, **characterized in that** the holder (13,13') has a recess (20) into which the steering lock (12) is inserted.

3. Handlebar arrangement (10) according to at least one of claims 1 to 2, **characterized in that** the holder (13,13') is substantially U-shaped, rectangular or trapezoidal.

4. Handlebar arrangement (10) according to claim 3, **characterized in that** the steering lock (12) is connected to a first (21a) and an opposite second leg (21b) of the holder (13).

5. Handlebar arrangement (10) according to at least one of claims 1 to 2, **characterized in that** the holder (13') comprises two holding sections (21a',21b') formed separately from one another, which are arranged spaced apart from one another, wherein the steering lock (12) is arranged between the two holding sections (21a',21b') and is connected to both holding sections (21a',21b').

6. Handlebar arrangement (10) according to claim 5, **characterized in that** at least one of the two or both holding sections (21a',21b') are designed as webs.

7. Vehicle with a handlebar arrangement (10), **characterized in that** the handlebar arrangement (10) is designed according to one of claims 1 to 6.

## Revendications

1. Agencement de guidon (10) pour un véhicule avec un élément de guidon (11) du véhicule, une serrure de contact (12) et un support (13,13') auquel la serrure de contact (12) est fixée, le support (13,13') étant fixé à l'élément de guidon (11) par des moyens de fixation (14), des éléments de découplage élastiques (15) étant disposés pour le découplage des chocs et/ou des vibrations entre l'élément de guidon (11) et le support (13,13'), l'élément de guidon (11) étant un té de fourche (11),
le support (13, 13') étant fixé à une face inférieure du té de fourche (11), **caractérisé en ce que**
la serrure de contact (12) s'étend en direction du conducteur à travers un évidement dans le té de fourche (11).

2. Agencement de guidon (10) selon la revendication 1, **caractérisé en ce que** le support (13,13') présente un évidement (20) dans lequel la serrure de contact (12) est insérée.

3. Agencement de guidon (10) selon au moins l'une des revendications 1 à 2, **caractérisé en ce que** le support (13,13') est sensiblement en forme de U, rectangulaire ou trapézoïdal.

4. Agencement de guidon (10) selon la revendication 3, **caractérisé en ce que** la serrure de contact (12) est reliée à une première branche (21a) et à une deuxième branche opposée (21b) du support (13).

5. Agencement de guidon (10) selon au moins l'une des revendications 1 à 2, **caractérisé en ce que** le support (13') comprend deux sections de maintien (21a',21b') formées séparément l'une de l'autre, qui sont disposées espacées l'une de l'autre, la serrure de contact (12) étant disposée entre les deux sections de maintien (21a',21b') et étant reliée aux deux sections de maintien (21a',21b').

6. Agencement de guidon (10) selon la revendication 5, **caractérisé en ce qu'**au moins l'une des deux ou les deux sections de maintien (21a',21b') sont conçues comme des barrettes.

7. Véhicule avec un agencement de guidon (10), **caractérisé en ce que** l'agencement de guidon (10) est conçu selon l'une des revendications 1 à 6.
